# EUROPEAN PATENT APPLICATION

(11) **EP 2 797 198 A1**
(43) Date of publication of application: **29.10.2014**
(21) Application number: 12860867.6
(22) Date of filing: 04.12.2012
(51) Int. Cl.: H02J 3/32, H01M 10/44, H02J 7/35

(54) **CHARGING/DISCHARGING DEVICE AND CHARGING/DISCHARGING SYSTEM USING SAME**

(30) Priority: 19.12.2011 JP 2011276988
(71) Applicant: Panasonic Corporation, Kadoma-shi, Osaka 571-8501 (JP)
(72) Inventor: INAKAGATA, Satoru, Osaka 540-6207 (JP)
(74) Representative: Appelt, Christian W.
(86) International application number: PCT/JP2012/081398
(87) International publication number: WO 2013/094396

(57) **Abstract**

To provide a charging/discharging device which can perform charging and discharging of a storage battery efficiently, and a charging/discharging system using the same. The charging/discharging system includes the charging/discharging device and a storage battery unit that includes the storage battery. The charging/discharging device includes a power conversion unit and a controller. The power conversion unit is provided on a charging/discharging path for the storage battery, and configured to perform power conversion. The controller includes a control part that is configured to control charging and discharging of the storage battery with the power conversion unit. The control part of the controller is configured to control the power conversion unit not to perform the charging and discharging of the storage battery when determining that conversion efficiency is low under a prescribed condition, where the conversion efficiency denotes a ratio of output power to input power in the power conversion unit.

## Description

### TECHNICAL FIELD

The invention relates to a charging/discharging device, which is configured to control charging and discharging of a storage battery, and a charging/discharging system using same.

### BACKGROUND ART

Conventionally, there has been known a charging/discharging system which is configured to charge a storage battery, with electric power that is generated by a solar cell or the like (e.g., see JP2009-159691A).

Incidentally, a converter, which is used when charging a storage battery, has a characteristic that conversion efficiency changes according to input power, where the conversion efficiency denotes a ratio of output power to the input power.

However, the conventional charging/discharging system is configured to charge the storage battery regardless of the conversion efficiency in the converter, and accordingly, it can be said that the conventional system hardly manages the electric power efficiently.

### DISCLOSURE OF THE INVENTION

It is an object of the present invention to provide a charging/discharging device, which can perform charging and discharging of a storage battery efficiently, and a charging/discharging system using same.

A charging/discharging device according to the present invention includes: a power conversion unit provided on a charging/discharging path for a storage battery, and configured to perform power conversion; and a control part configured to control charging and discharging of the storage battery with the power conversion unit. The control part is configured to control the power conversion unit not to perform the charging and discharging of the storage battery when determining that conversion efficiency is low under a prescribed condition. The conversion efficiency denotes a ratio of output power to input power in the power conversion unit.

It is preferred that the charging/discharging device further includes an input measuring part configured to measure the input power that is input to the power conversion unit. In this case, the control part is preferably configured to determine that the conversion efficiency is low, when the input power measured by the input measuring part is equal to or less than a predetermined threshold, and then control the power conversion unit not to perform the charging and discharging of the storage battery.

It is preferred that the charging/discharging device further includes: an input measuring part configured to measure the input power that is input to the power conversion unit; and an output measuring part configured to measure the output power that is output from the power conversion unit. In this case, the control part is preferably configured to obtain the conversion efficiency from the input power measured by the input measuring part and the output power measured by the output measuring part, and configured to determine that the conversion efficiency is low, when the conversion efficiency is equal to or less than a predetermined reference value, and then control the power conversion unit not to perform the charging and discharging of the storage battery.

It is preferred that the charging/discharging device further includes: an input measuring part configured to measure the input power that is input to the power conversion unit; and a storage part configured to store a correspondence relation between the input power and the conversion efficiency. In this case, the control part is preferably configured to read, from the storage part, the conversion efficiency that corresponds to the input power measured by the input measuring part, and then determine that the conversion efficiency is low, when the conversion efficiency is equal to or less than a predetermined reference value, and then control the power conversion unit not to perform the charging and discharging of the storage battery.

In the charging/discharging device, it is preferred that the control part is configured to control the power conversion unit to perform the charging and discharging of the storage battery regardless of the conversion efficiency, when no power is supplied from a commercial power grid.

A charging/discharging system according to the present invention includes: the charging/discharging device; and a power supply device where output power thereof is varied.

In the charging/discharging system, it is preferred that in the charging/discharging device, the power conversion unit includes a plurality of power conversion units. In this case, preferably, the charging/discharging system further includes a total-input-acquiring part and a managing part. The total-input-acquiring part is configured to acquire total power obtained by summing input powers that are input to the plurality of power conversion units. The managing part is configured to select at least one power conversion unit to be used for performing the power conversion, from the plurality of power conversion units, according to the total power acquired by the total-input-acquiring part, and instruct the control part not to allow the remaining power conversion units to perform the power conversion.

In the charging/discharging system, it is preferred that the power conversion unit includes a bidirectional DC/AC inverter and a plurality of bidirectional DC/DC converters. The bidirectional DC/AC inverter is configured to convert the input power from AC power to DC power for the charging of the storage battery, and configured to convert power stored in the storage battery from DC power to AC power for the discharging of the storage battery to output the converted AC power as the output power. The plurality of bidirectional DC/DC converters are provided between the storage battery and the bidirectional DC/AC inverter, each of which is configured to convert power to prescribed DC power. In this case, the control part is preferably configured to select at least one bidirectional DC/DC converter to be used for performing the power conversion, according to the input power, and control not to allow the remaining bidirectional DC/DC converters to perform the power conversion.

In the charging/discharging system, it is preferred that the power supply device is a solar power generation device configured to perform maximum power point tracking control to a solar cell, and the solar power generation device includes: the solar cell; a boosting part configured to boost DC power that is generated by the solar cell; and a solar-cell-side power conversion unit configured to convert, to AC power, the DC power that is output from the boosting part. In this case, the charging/discharging device is preferably provided to be inserted between the storage battery, and a contact point between the boosting part and the solar-cell-side power conversion unit.

According to the present invention, it is possible to perform charging and discharging of the storage battery efficiently.

### BRIEF DESCRIPTION OF THE DRAWINGS

Preferred embodiments of the present invention will now be described in further details. Other features and advantages of the present invention will become better understood with regard to the following detailed description and accompanying drawings where:
Fig. 1 is a schematic drawing illustrating a configuration of a charging/discharging system according to First Embodiment;
Fig. 2 is a drawing illustrating a power generation amount in a solar cell according to the First Embodiment;
Fig. 3 is a block diagram illustrating a configuration of a charging/discharging device according to the First Embodiment;
Fig. 4 is a drawing illustrating a relation between input power and conversion efficiency in a power conversion unit according to the First Embodiment;
Fig. 5 is a schematic drawing illustrating a configuration of a charging/discharging system according to Second Embodiment;
Fig. 6A is a drawing illustrating an efficiency characteristic in a case where a plurality of charging/discharging devices are connected in parallel according to the Second Embodiment;
Fig. 6B is a drawing illustrating an efficiency characteristic of each power conversion unit according to the Second Embodiment;
Fig. 7 is a schematic drawing illustrating a configuration of a charging/discharging system according to Third Embodiment;
Fig. 8A is a drawing illustrating an efficiency characteristic in a case where a plurality of charging/discharging devices are connected in parallel according to the Third Embodiment;
Fig. 8B is a drawing illustrating an efficiency characteristic of each power conversion unit according to the Third Embodiment;
Fig. 9 is a schematic drawing illustrating a configuration of a charging/discharging system according to Fourth Embodiment;
Fig. 10 is a schematic drawing illustrating a configuration of a charging/discharging system according to Fifth Embodiment; and
Fig. 11 is a schematic drawing illustrating a circuit configuration of a charging/discharging device according to the Fifth Embodiment.

### BEST MODE FOR CARRYING OUT THE INVENTION

### (First Embodiment)

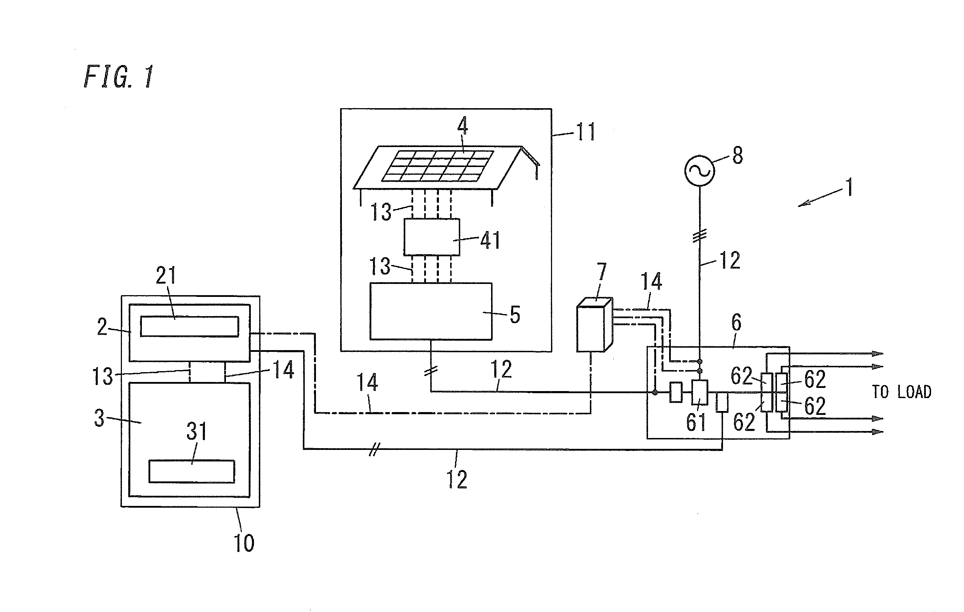

As shown in Fig. 1, a charging/discharging system 1 according to First Embodiment includes a charging/discharging device 2, a storage battery unit 3, a solar cell 4, a power conditioner (solar-cell-controller) 5. Further, the charging/discharging system 1 includes a grid-connected board 6, and a reverse-flow-monitoring unit 7. The charging/discharging device 2, storage battery unit 3 and reverse-flow-monitoring unit 7 have a function capable of communicating with each other. The charging/discharging device 2 and storage battery unit 3 constitute an electric storage system 10. The solar cell 4 and power conditioner 5 constitute a solar power generation device 11. In Fig. 1, solid lines 12 denote power paths for AC power. Specifically, examples of the paths include a power path between the electric storage system 10 and grid-connected board 6, a power path between the solar power generation device 11 and grid-connected board 6, and a power path between the grid-connected board 6 and a commercial power grid 8 that will be described later. Broken lines 13 denote power paths for DC power. Specifically, examples of the paths include a power path between the solar cell 4 and a junction box 41 that will be described later, a power path between the junction box 41 and power conditioner 5, and a power path between the charging/discharging device 2 and storage battery unit 3. Dashed lines 14 denote communication lines. Specifically, examples of the lines include a communication line between the electric storage system 10 and reverse-flow-monitoring unit 7, a communication line between the reverse-flow-monitoring unit 7 and grid-connected board 6, and a communication line between the charging/discharging device 2 and storage battery unit 3.

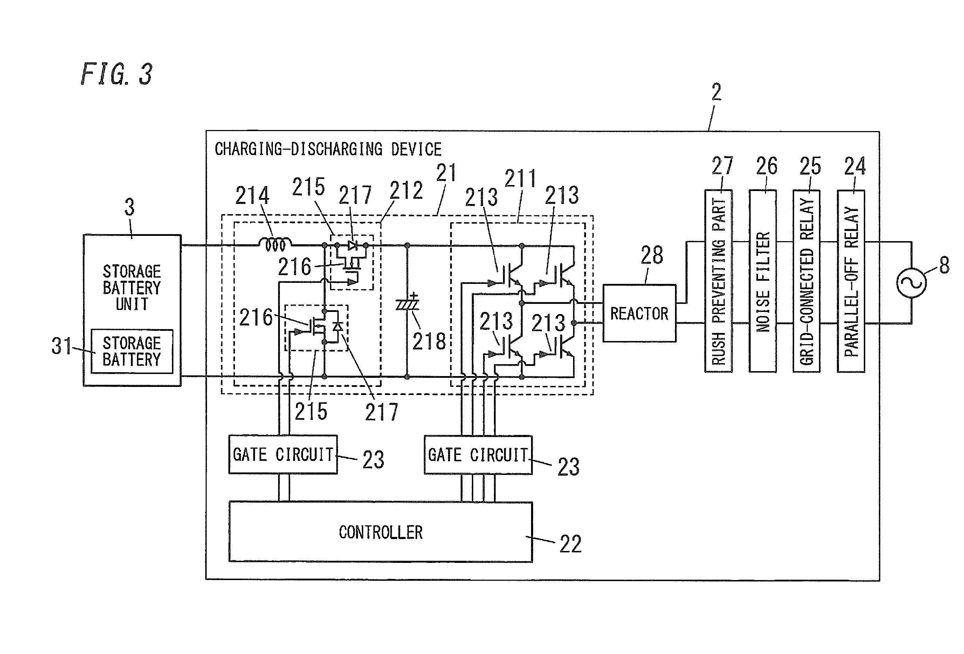

In this charging/discharging system 1, the charging/discharging device 2 is configured to perform charging and discharging of a storage battery 31 (see Fig. 3) of the storage battery unit 3 only when conversion efficiency in a power conversion unit 21 is high. Hereinafter, each component in the charging/discharging system 1 will be described.

The storage battery unit 3 includes the storage battery 31 (see Fig. 3), and is configured to perform charging and discharging of the storage battery 31 under control of the charging/discharging device 2. Examples of the storage battery 31 include a nickel-hydrogen battery, a lithium-ion battery and a lead storage battery. The storage battery 31 is capable of storing electric power that is generated by the solar cell 4 and commercial power that is supplied from the commercial power grid 8.

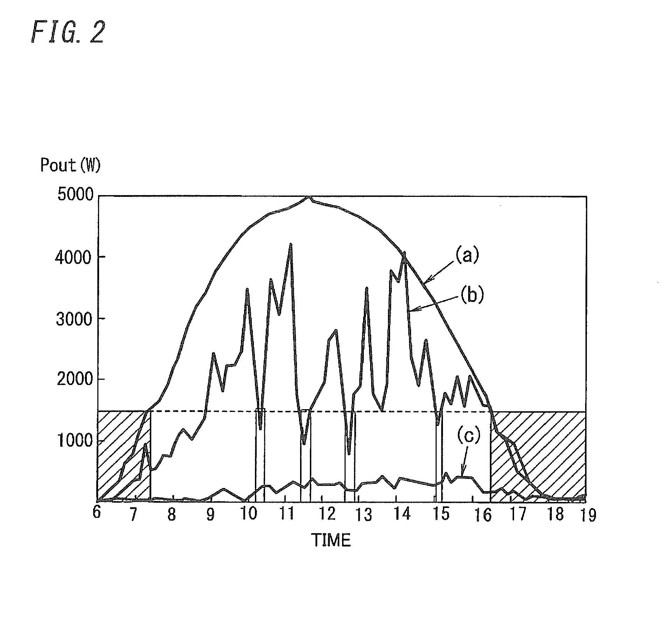

The solar cell 4 is installed on a roof of a dwelling unit for example, and generates DC power by solar power generation, in which electric power is generated utilizing solar energy. Fig. 2 shows one example of a power generation amount (generated power) per day in the solar cell 4. In Fig. 2, (a) denotes a case of a fine day, (b) denotes a case of a cloudy day, and (c) denotes a case of a rainy day. As shown in Fig. 1, the junction box 41 is provided between the solar cell 4 and power conditioner 5. The power conditioner 5 is configured to perform Maximum Power Point Tracking (MPPT) control to the solar cell 4. In addition, the power conditioner 5 is configured to boost DC power being the generated power (power generation amount) in the solar cell 4, and convert the boosted DC power to AC power.

The grid-connected board 6 includes a main breaker 61 and a plurality of branch breakers 62, 62, .... The main breaker 61 is provided to acquire AC power from the charging/discharging device 2, power conditioner 5 and commercial power grid 8 and output to each branch breaker 62. Each branch breaker 62 is provided to supply electric power to a load (not shown) that is connected thereto via an outlet. The reverse-flow-monitoring unit 7 is configured to monitor a state of selling electric power to a side of the commercial power grid 8.

As shown in Fig. 3, the charging/discharging device 2 includes the power conversion unit 21, a controller 22, and gate circuits 23 and 23. The charging/discharging device 2 further includes a parallel-off relay 24, a grid-connected relay 25, a noise filter 26, a rush preventing part 27 and a reactor 28.

The power conversion unit 21 is constituted by a bidirectional DC/AC inverter 211 and a bidirectional DC/DC converter 212. The bidirectional DC/AC inverter 211 is configured to convert input power from AC power to DC power for the charging of the storage battery 31, and to convert power stored in the storage battery from DC power to AC power for the discharging of the storage battery 31 to output the converted AC power as output power. The bidirectional DC/DC converter 212 is provided between the storage battery unit 3 and the bidirectional DC/AC inverter 211, and configured to convert power to prescribed DC power for the charging and discharging. The bidirectional DC/AC inverter 211 is constituted by four switching elements 213, 213, .... Each switching element 213 is configured to switch on/off thereof in response to a signal received from the gate circuit 23. The bidirectional DC/DC converter 212 is constituted by an inductor 214 and two switching sections 215 and 215. Each switching section 215 is constituted by a switching element 216 and a diode 217 that is connected in parallel to the switching element 216. The switching element 216 is configured to switch on/off thereof in response to a signal received from the gate circuit 23. A capacitor 218 is provided between the bidirectional DC/AC inverter 211 and the bidirectional DC/DC converter 212.

The power conversion unit 21 described above is inserted into and provided on a charging/discharging path for the storage battery 31, and configured to perform power conversion. Specifically, in the charging, the power conversion unit 21 is configured to convert the input power supplied from the solar cell 4, and output the output power to the storage battery unit 3 (storage battery 31). On the other hand, in the discharging, the power conversion unit 21 is configured to convert the input power supplied from the storage battery unit 3 (storage battery 31), and output the output power to the grid-connected board 6.

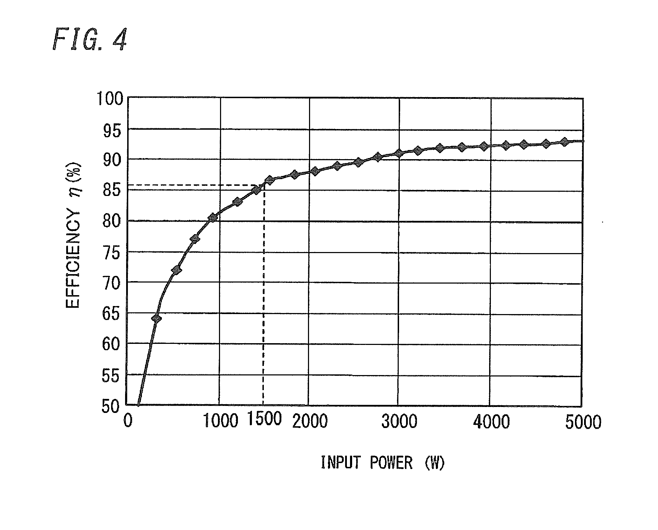

Fig. 4 shows a conversion efficiency characteristic (efficiency curved line) that denotes conversion efficiency with respect to the input power in the power conversion unit 21. The conversion efficiency in the power conversion unit 21 is increased in accordance with an increase of the input power in the power conversion unit 21, namely the generated power in the solar cell 4. Accordingly, while the generated power in the solar cell 4 is maximum power, that is, while the solar cell 4 operates near a maximum power point according to the MPPT control, the charging/discharging device 2 performs the charging of the storage battery 31 of the storage battery unit 3.

The controller 22 shown in Fig. 3 includes an input measuring part (not shown) and a control part (not shown). In the charging, the input measuring part is configured to measure the input power that is input to the power conversion unit 21. The control part is configured to control the charging and discharging of the storage battery 31 with the power conversion unit 21.

In the charging and discharging, the control part is configured to control the power conversion unit 21 not to perform the charging and discharging of the storage battery 31 when determining that the conversion efficiency in the power conversion unit 21 is low under a prescribed condition. The conversion efficiency denotes a ratio of the output power to the input power in the power conversion unit 21.

Specifically, in the controller 22 of the present embodiment, the control part is configured to determine that the conversion efficiency is low, when the input power measured by the input measuring part is equal to or less than a threshold, and then control the power conversion unit 21 not to perform the charging and discharging of the storage battery 31. The above threshold is a predetermined value. In particular, when the conversion efficiency is gradually increased in the conversion efficiency characteristic, validity of determination becomes enhanced while processing being simple, and therefore the processing is performed effectively.

Here, when no power is supplied from the commercial power grid 8 (for example, in power failure), the control part is configured to control the power conversion unit 21 to perform the charging and discharging of the storage battery 31 regardless of the conversion efficiency.

Next, operation of the charging/discharging system 1 of the present embodiment will be described. Here, the operation is described, using the example of Fig. 2. It is assumed that the threshold is 1500W. In a case of a fine day, the power generation amount in the solar cell 4, namely, the input power in the power conversion unit 21 is 1500W or less during a time period from 6:00 to 7:30 and a time period from 16:30 to 19:00, when described using only a time period illustrated. In a case of a cloudy day, the power generation amount is 1500W or less during some time periods of daytime. On the other hand, in a case of a rainy day, the power generation amount in the solar cell 4 is always 200W or less. When the input power in the power conversion unit 21 exceeds 1500W, the conversion efficiency in the power conversion unit 21 is good and accordingly, the charging/discharging device 2 controls the power conversion unit 21 to perform the charging of the storage battery 31. On the other hand, when the input power in the power conversion unit 21 is 1500W or less, the conversion efficiency in the power conversion unit 21 is bad and accordingly, the charging/discharging device 2 controls the power conversion unit 21 to stop the charging of the storage battery 31. In this case, it is possible to sell the generated power in the solar cell 4, or reduce purchase of power by supplying the generated power in the solar cell 4 to a load (not shown). Therefore, it is possible to enhance an economical effect.

As described above, in the charging/discharging system 1 of the present embodiment, the charging/discharging device 2 is configured to control the power conversion unit 21 not to perform the charging and discharging of the storage battery 31 when determining that conversion efficiency is low, where the conversion efficiency denotes a ratio of the output power to the input power in the power conversion unit 21. The charging/discharging system 1 of the present embodiment therefore can charge/discharge the storage battery 31 only when the conversion efficiency is good, and accordingly, it is possible to suppress conversion loss.

In particular, in the charging/discharging system 1 of the present embodiment, the charging/discharging device 2 is configured to control not to perform the charging of the storage battery 31 when the conversion efficiency in the power conversion unit 21 is low, and accordingly, it is possible to charge the storage battery 31 only when the conversion efficiency is good, and therefore perform the charging of the storage battery 31 efficiently. Furthermore, in the charging/discharging system 1 of the present embodiment, when the conversion efficiency is low, it is possible to sell electric power to an electric power company or the like, or reduce purchase of power by supplying the generated power to a load. Therefore it is possible to enhance an economical effect.

In addition, in the charging/discharging system 1 of the present embodiment, the charging/discharging device 2 is configured to determine that the conversion efficiency in the power conversion unit 21 is low, when the input power measured by the input measuring part of the controller 22 is equal to or less than the threshold. Accordingly, the charging/discharging system 1 of the present embodiment can easily determine that the conversion efficiency in the power conversion unit 21 is in a low-state.

Furthermore, in the charging/discharging system 1 of the present embodiment, the power conditioner (solar-cell-controller) 5 is configured to perform the MPPT control to the solar cell 4, and accordingly the solar cell 4 can be operated in a state of maximum efficiency, that is, near the maximum power point. Therefore, in the charging/discharging system 1 of the present embodiment, it is possible to charge the storage battery 31 in a state where the efficiency in the solar cell 4 becomes the maximum. In particular, when being gradually increased in the conversion efficiency characteristic of the charging/discharging device 2, the conversion efficiency becomes better with an increase of the input power in the charging/discharging device 2. Therefore, the conversion efficiency in the charging/discharging device 2 becomes better, as the output power in the solar cell 4 becomes large as much as possible by the MPPT control.

As another variation according to the present embodiment, the charging/discharging device 2 may be configured to calculate actual conversion efficiency, and determine whether or not the actual conversion efficiency is low. The controller 22 of the charging/discharging device 2 in this variation includes an output measuring part (not shown) configured to measure the output power that is output from the power conversion unit 21. The control part of the controller 22 in the variation is configured to obtain the conversion efficiency from the input power measured by the input measuring part of the controller 22 and the output power measured by the output measuring part. Further, the control part is configured to determine that the conversion efficiency is low, when the conversion efficiency is equal to or less than a predetermined reference value, and then control the power conversion unit 21 not to perform the charging and discharging of the storage battery 31.

In the charging/discharging device 2 of the variation, as described above, the conversion efficiency in the power conversion unit 21 is determined to be low, when the conversion efficiency obtained from the input power measured by the input measuring part of the controller 22 and the output power measured by the output measuring part is equal to or less than the reference value. Therefore, similarly to the above-mentioned first example of the present embodiment, the charging/discharging device 2 of the variation can easily determine that the conversion efficiency in the power conversion unit 21 is in a low-state.

As yet another variation according to the present embodiment, the charging/discharging device 2 may be configured to determine whether or not the conversion efficiency is low, with a correspondence relation between the input power and the conversion efficiency, as shown in Fig. 4. The charging/discharging device 2 in this variation further includes a storage part (not shown) configured to store the correspondence relation between the input power and the conversion efficiency. The control part of the controller 22 in the variation is configured to read, from the storage part, the conversion efficiency that corresponds to the input power measured by the input measuring part of the controller 22, and then determine that the conversion efficiency is low, when the conversion efficiency is equal to or less than a predetermined reference value, and then control the power conversion unit 21 not to perform the charging and discharging of the storage battery 31.

In the charging/discharging device 2 of the variation, as described above, the conversion efficiency corresponding to the input power measured by the input measuring part of the controller 22 is read from the storage part, and the conversion efficiency in the power conversion unit 21 is determined to be low, when the conversion efficiency is equal to or less than the reference value. Therefore, similarly to the above-mentioned first example of the present embodiment, the charging/discharging device 2 of the variation can easily determine that the conversion efficiency in the power conversion unit 21 is in a low-state.

### (Second Embodiment)

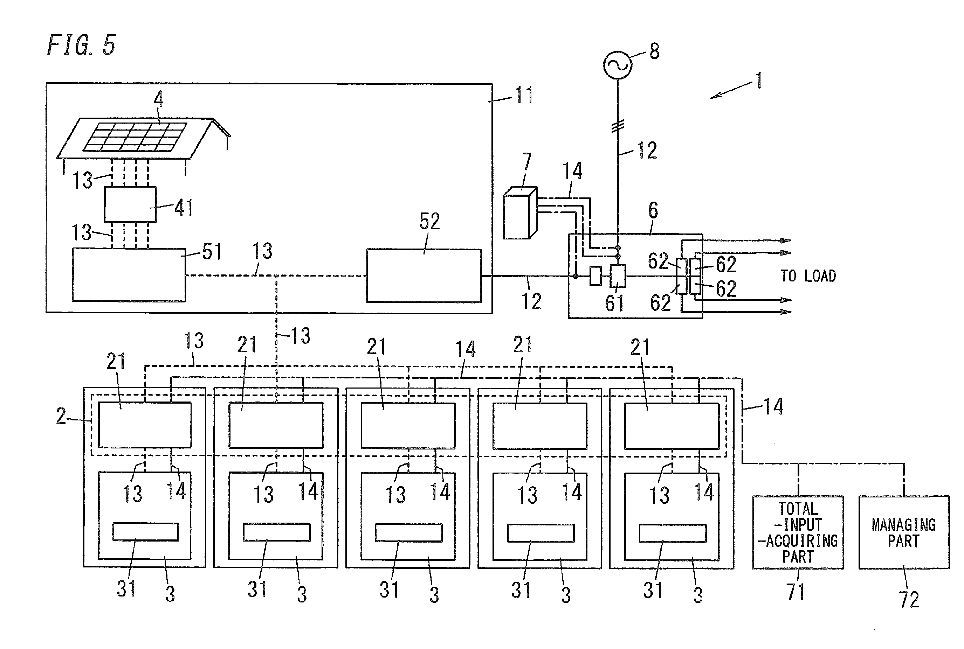

As shown in Fig. 5, a charging/discharging system 1 according to Second Embodiment, is different from that according to First Embodiment (see Fig. 1) in that a charging/discharging device 2 includes a plurality of power conversion units 21, 21, ... (five in the illustrated example), and a plurality of storage battery units 3, 3, ... (similarly, five in the illustrated example) (storage batteries 31, 31, ...) that correspond to the plurality of power conversion units 21, 21, ... in one-to-one, respectively. Components that are similar to those of the charging/discharging system 1 of the First Embodiment are assigned with same reference signs and the explanation thereof is omitted. In Fig. 5, solid lines 12 denote power paths for AC power, broken lines 13 denote power paths for DC power, and dashed lines 14 denote communication lines.

The charging/discharging system 1 of the present embodiment includes a total-input-acquiring part 71 and a managing part 72.

The total-input-acquiring part 71 is configured to acquire total power obtained by summing input powers that are input to the plurality of power conversion units 21, 21, .... The total-input-acquiring part 71 may include its own power measuring means for measuring the input powers input to the plurality of power conversion units 21, 21, ... , or may be configured to acquire information relating to the input power from each power conversion unit 21 and then sum the input powers. In addition, as shown in Fig. 5, the total-input-acquiring part 71 of the present embodiment is provided separately from the charging/discharging device 2, but may be provided in the charging/discharging device 2.

The managing part 72 is configured to select at least one power conversion unit 21 to be used for performing the power conversion, from the plurality of power conversion units 21, 21, ... , according to the total power acquired by the total-input-acquiring part 71, and instruct the controller 22 not to allow the remaining power conversion units 21 to perform the power conversion. In addition, as shown in Fig. 5, the managing part 72 of the present embodiment is provided separately from the charging/discharging device 2 and is configured to communicate with the charging/discharging device 2, but may be provided in the charging/discharging device 2.

The charging/discharging system 1 of the present embodiment further includes a boosting part 51 and a solar-cell-side power conversion unit 52. The boosting part 51 is a DC/DC converter that has a function of Maximum Power Point Tracking (MPPT) control for example, and is configured to boost power generated by a solar cell 4. The solar-cell-side power conversion unit 52 is a bidirectional DC/AC inverter for example, and is configured to convert, to AC power, DC power that is output from the boosting part 51. In the present embodiment, the solar cell 4, boosting part 51 and solar-cell-side power conversion unit 52 constitute a solar power generation device 11. That is, each power conversion unit 21 of the present embodiment is not required to include the bidirectional DC/AC inverter 211 for performing DC-AC conversion and AC-DC conversion described in the First Embodiment.

In the charging/discharging device 2 of the present embodiment, the plurality of power conversion units 21, 21, ... are provided to be inserted between the storage battery unit 3 (storage battery 31), and a contact point between the boosting part 51 and the solar-cell-side power conversion unit 52. Regarding functions similar to those of the charging/discharging device 2 (see Fig. 1) of the First Embodiment, the explanation thereof is omitted.

Next, operation of the charging/discharging system 1 according to the present embodiment will be described. The charging/discharging system 1 of the present embodiment is configured to select a power conversion unit 21 of the charging/discharging device 2 to be used for charging and discharging of the storage battery 31.

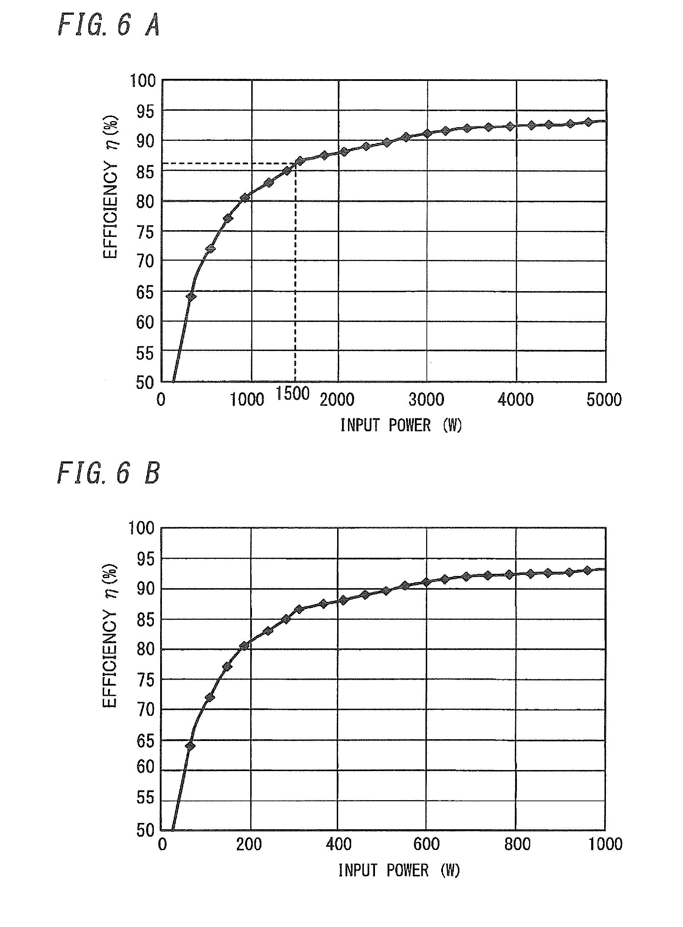

Fig. 6A shows an efficiency characteristic in a case where five power conversion units 21, 21, ... are connected in parallel. Fig. 6B shows an efficiency characteristic of a single power conversion unit 21. When efficiencies in a case where the input power is for example 1kW are compared with each other, the efficiency in Fig. 6A is 82% and the efficiency in Fig. 6B is 94%. Therefore, the efficiency in the case of using the single power conversion unit 21 is better, and accordingly, the remaining power conversion units 21, 21, ... are stopped to perform individual operation of the single power conversion unit 21.

The charging/discharging system 1 of the present embodiment, as described above, is configured to select at least one power conversion unit 21 from the plurality of power conversion units 21, 21, ... , and allow performing charging and discharging of a storage battery 31 that corresponds to the selected power conversion unit 21. Therefore, it is possible to operate more efficiently, compared with the case of operating all the plurality of power conversion units 21, 21, .... That is, the operation can be performed in a state of maximum efficiency by a combination of the plurality of power conversion units 21, 21, ....

Furthermore, in the charging/discharging system 1 of the present embodiment, the charging/discharging device 2 is provided to be inserted between the storage battery unit 3 (storage battery 31), and a contact point between the boosting part 51 and the solar-cell-side power conversion unit 52. Therefore, each power conversion unit 21 of the present embodiment is not required to include the bidirectional DC/AC inverter 211 described in the First Embodiment, and it is possible to perform charging and discharging of the storage battery 31 with the generated power in the solar cell 4, without performing DC-AC conversion and AC-DC conversion, and accordingly, it is possible to reduce conversion loss.

### (Third Embodiment)

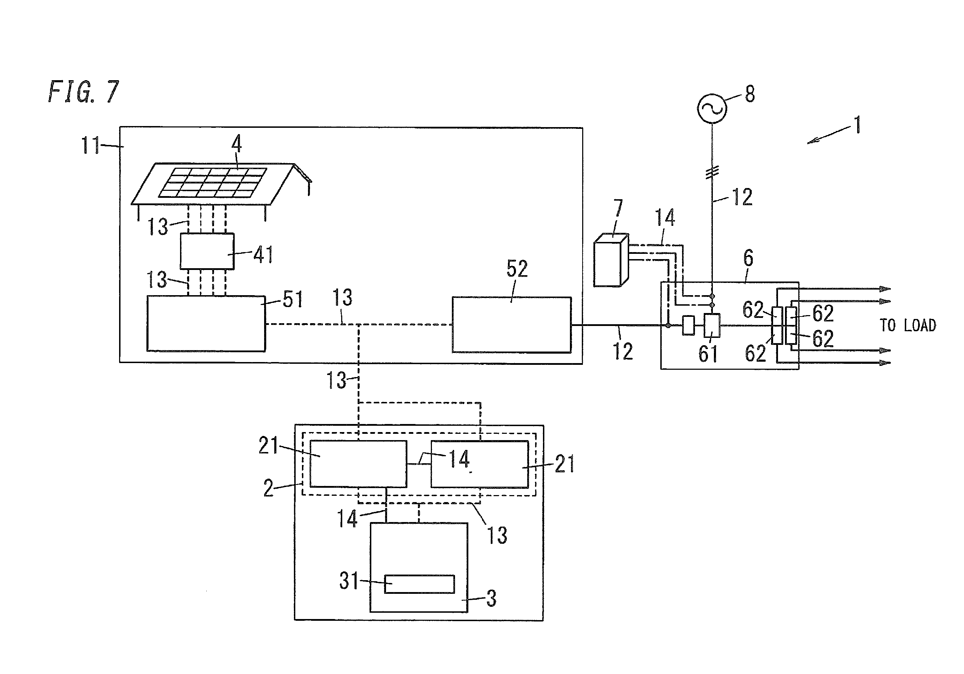

As shown in Fig. 7, a charging/discharging system 1 according to Third Embodiment is different from that (see Fig. 5) according to the Second Embodiment in that a charging/discharging device 2 includes two power conversion units 21 and 21 and a single storage battery unit 3 (storage battery 31) that corresponds to the two power conversion units 21 and 21. That is, in the charging/discharging system 1 of the present embodiment, a plurality of power conversion units 21 and 21 (two in the illustrated example) are provided for the single storage battery unit 3. Components that are similar to those of the charging/discharging system 1 of the Second Embodiment are assigned with same reference signs and the explanation thereof is omitted. In Fig. 7, solid lines 12 denote power paths for AC power, broken lines 13 denote power paths for DC power, and dashed lines 14 denote communication lines.

In the charging/discharging device 2 of the present embodiment, two circuits are connected in parallel, and charging and discharging of the storage battery 31 in the storage battery unit 3 are performed in a state where one of the two circuits is turned off according to a condition. Each-charging/discharging device 2 of the present embodiment includes a bidirectional DC/DC converter.

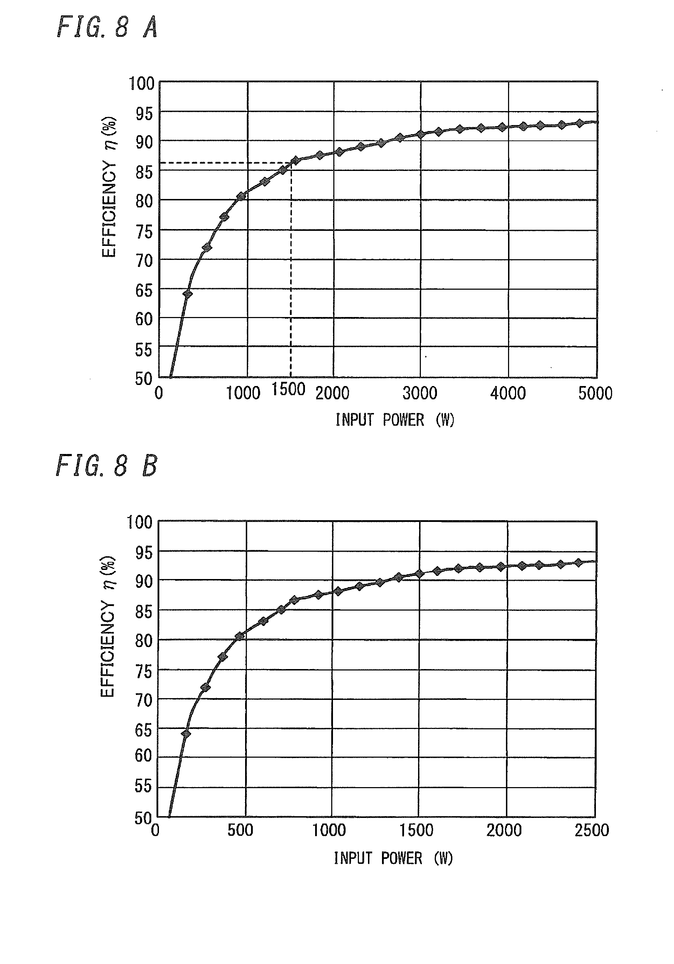

Fig. 8A shows an efficiency characteristic in a case where the two power conversion units 21 and 21 are operated in parallel. Fig. 8B shows an efficiency characteristic in individual operation of any one of the two power conversion units 21 and 21. When efficiencies in a case where the input power is for example 2kW are compared with each other, the efficiency in Fig. 8A is 88% and the efficiency in Fig. 8B is 93%. Therefore, the efficiency in individual operation of any one is better. In the present embodiment, a total-input-acquiring part 71 and managing part 72 are built in a controller 22.

The charging/discharging system 1 of the present embodiment, as described above, is configured to select at least one power conversion unit from the plurality of power conversion units 21 and 21 and allow performing charging and discharging of the storage battery 31, similarly to the Second Embodiment. However, unlike the Second Embodiment, an object for the charging and discharging is the single storage battery 31, which is shared with the other power conversion unit 21 that has not been selected. Therefore, it is possible to operate more efficiently, compared with the case of operating all the plurality of power conversion units 21 and 21. That is, the operation can be performed in a state of maximum efficiency by a combination of the plurality of power conversion units 21 and 21.

### (Fourth Embodiment)

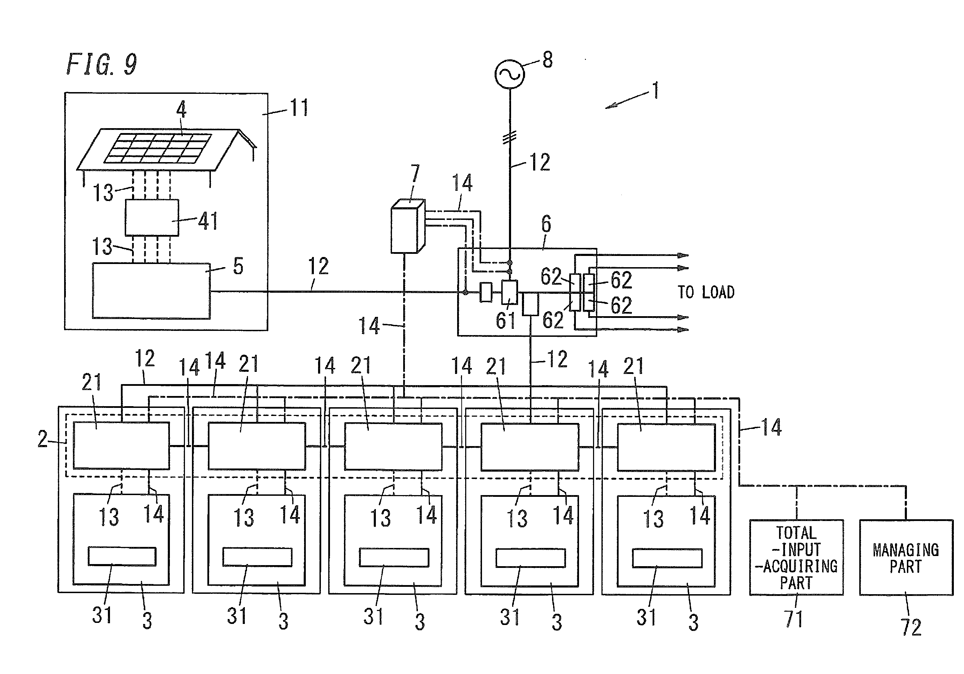

As shown in Fig. 9, a charging/discharging system 1 according to Fourth Embodiment is different from that (see Fig. 5) according to the Second Embodiment in that a charging/discharging device 2 is connected to a grid-connected board 6. Components that are similar to those of the charging/discharging system 1 of the Second Embodiment are assigned with same reference signs and the explanation thereof is omitted. In Fig. 9, solid lines 12 denote power paths for AC power, broken lines 13 denote power paths for DC power, and dashed lines 14 denote communication lines.

The charging/discharging device 2 of the present embodiment includes a bidirectional DC/AC inverter, instead of the bidirectional DC/DC converter in the Second Embodiment. Regarding functions similar to those of the charging/discharging device 2 (see Fig. 5) of the Second Embodiment, the explanation thereof is omitted.

The charging/discharging system 1 of the present embodiment, as described above, is configured to select at least one power conversion unit from the plurality of power conversion units 21, 21, ... and allow performing charging and discharging of a storage battery 31 that corresponds to the selected power conversion unit 21, similarly to the Second Embodiment. Therefore, it is possible to operate more efficiently, compared with the case of operating all the plurality of power conversion units 21, 21, .... That is, the operation can be performed in a state of maximum efficiency by a combination of the plurality of power conversion units 21, 21, ....

### (Fifth Embodiment)

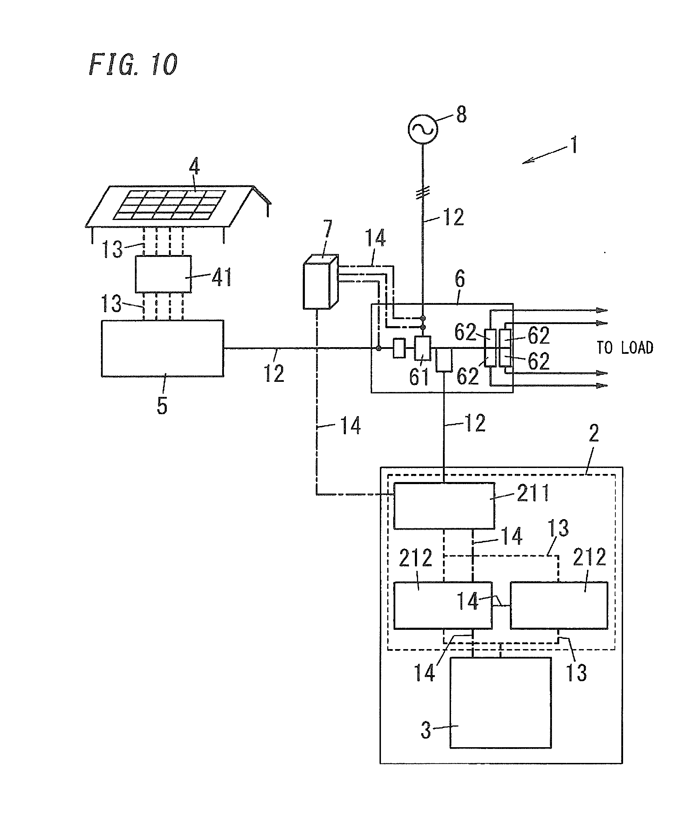

As shown in Fig. 10, a charging/discharging system 1 according to Fifth Embodiment is different from that (see Fig. 7) according to the Third Embodiment in that a charging/discharging device 2 is connected to a grid-connected board 6. Components that are similar to those of the charging/discharging system 1 of the Third Embodiment are assigned with same reference signs and the explanation thereof is omitted. In Fig. 10, solid lines 12 denote power paths for AC power, broken lines 13 denote power paths for DC power, and dashed lines 14 denote communication lines.

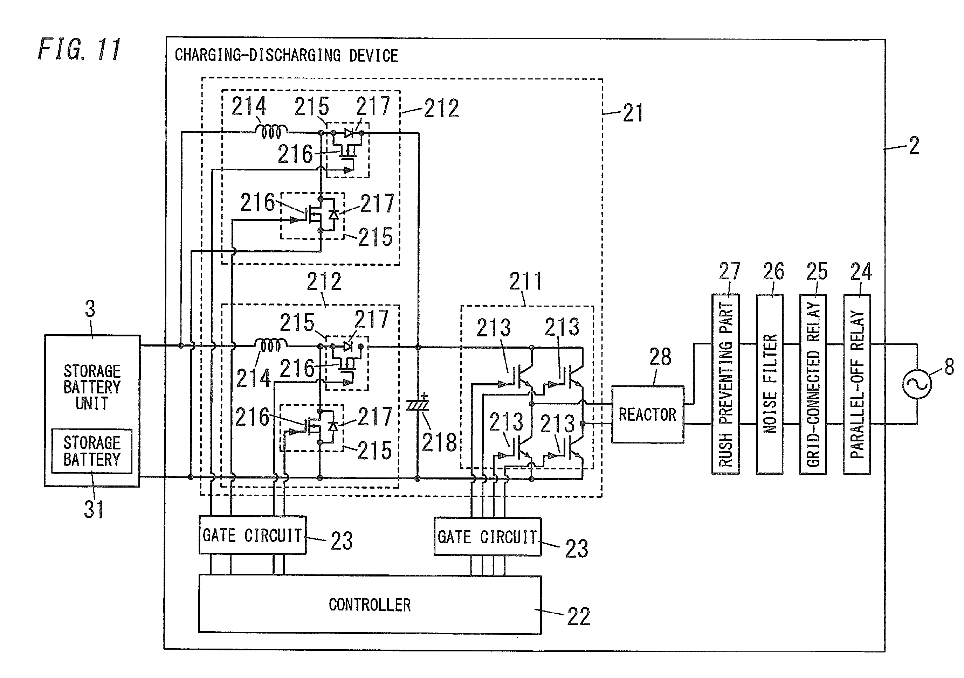

As shown in Fig. 11, the charging/discharging device 2 of the present embodiment includes a plurality of bidirectional DC/DC converters 212 and 212 (two in the illustrated example) in a single power conversion unit 21. That is, a single bidirectional DC/AC inverter 211 is shared with the two bidirectional DC/DC converters 212 and 212. Regarding functions similar to those of the charging/discharging device 2 (see Fig. 7) of the Third Embodiment, the explanation thereof is omitted.

In the charging/discharging system 1 of the present embodiment, as described above, the control part of the controller 22 is configured to select at least one bidirectional DC/DC converter from the plurality of bidirectional DC/DC converters 212 and 212 in the single power conversion unit 21, and control to perform charging and discharging of a storage battery 31. The control part is then configured to control not to allow the remaining bidirectional DC/DC converters to perform power conversion. Therefore, it is possible to operate more efficiently, compared with the case of operating all the plurality of bidirectional DC/DC converters 212 and 212. That is, the operation can be performed in a state of maximum efficiency by a combination of the plurality of bidirectional DC/DC converters 212 and 212.

Although the present invention has been described with reference to certain preferred embodiments, numerous modifications and variations can be made by those skilled in the art without departing from the true spirit and scope of this invention, namely claims.

## Claims

1. A charging/discharging device, comprising:
a power conversion unit provided on a charging/discharging path for a storage battery, and configured to perform power conversion; and
a control part configured to control charging and discharging of the storage battery with the power conversion unit,
wherein the control part is configured to control the power conversion unit not to perform the charging and discharging of the storage battery when determining that conversion efficiency is low under a prescribed condition, the conversion efficiency denoting a ratio of output power to input power in the power conversion unit.

2. The charging/discharging device according to claim 1, further comprising an input measuring part configured to measure the input power that is input to the power conversion unit,
wherein the control part is configured to determine that the conversion efficiency is low, when the input power measured by the input measuring part is equal to or less than a predetermined threshold, and then control the power conversion unit not to perform the charging and discharging of the storage battery.

3. The charging/discharging device according to claim 1, further comprising:
an input measuring part configured to measure the input power that is input to the power conversion unit; and
an output measuring part configured to measure the output power that is output from the power conversion unit,
wherein the control part is configured to obtain the conversion efficiency from the input power measured by the input measuring part and the output power measured by the output measuring part,
the control part being configured to determine that the conversion efficiency is low, when the conversion efficiency is equal to or less than a predetermined reference value, and then control the power conversion unit not to perform the charging and discharging of the storage battery.

4. The charging/discharging device according to claim 1, further comprising:
an input measuring part configured to measure the input power that is input to the power conversion unit; and
a storage part configured to store a correspondence relation between the input power and the conversion efficiency,
wherein the control part is configured to read, from the storage part, the conversion efficiency that corresponds to the input power measured by the input measuring part, and then determine that the conversion efficiency is low, when the conversion efficiency is equal to or less than a predetermined reference value, and then control the power conversion unit not to perform the charging and discharging of the storage battery.

5. The charging/discharging device according to any one of claims 1 to 4,
wherein the control part is configured to control the power conversion unit to perform the charging and discharging of the storage battery regardless of the conversion efficiency, when no power is supplied from a commercial power grid.

6. A charging/discharging system, comprising:
the charging/discharging device according to any one of claims 1 to 5; and
a power supply device where output power thereof is varied.

7. The charging/discharging system according to claim 6,
wherein in the charging/discharging device, the power conversion unit comprises a plurality of power conversion units, and
wherein the charging/discharging system further comprises:
a total-input-acquiring part configured to acquire total power obtained by summing input powers that are input to the plurality of power conversion units; and
a managing part configured to select at least one power conversion unit to be used for performing the power conversion, from the plurality of power conversion units, according to the total power acquired by the total-input-acquiring part, and instruct the control part not to allow the remaining power conversion units to perform the power conversion.

8. The charging/discharging system according to claim 6,
wherein the power conversion unit comprises:
a bidirectional DC/AC inverter configured to convert the input power from AC power to DC power for the charging of the storage battery,
the bidirectional DC/AC inverter being configured to convert power stored in the storage battery from DC power to AC power for the discharging of the storage battery to output the converted AC power as the output power; and
a plurality of bidirectional DC/DC converters provided between the storage battery and the bidirectional DC/AC inverter, each of which being configured to convert power to prescribed DC power, and
wherein the control part is configured to select at least one bidirectional DC/DC converter to be used for performing the power conversion, according to the input power, and control not to allow the remaining bidirectional DC/DC converters to perform the power conversion.

9. The charging/discharging system according to any one of claims 6 to 8,
wherein the power supply device is a solar power generation device configured to perform maximum power point tracking control to a solar cell,
wherein the solar power generation device comprises:
the solar cell;
a boosting part configured to boost DC power that is generated by the solar cell; and
a solar-cell-side power conversion unit configured to convert, to AC power, the DC power that is output from the boosting part, and
wherein the charging/discharging device is provided to be inserted between the storage battery, and a contact point between the boosting part and the solar-cell-side power conversion unit.

## Amended claims

### Amended claims under Art. 19.1 PCT

**1.** (Deleted)

**2.** (Deleted)

**3.** (Amended) A charging/discharging device, comprising:
a power conversion unit provided on a charging/discharging path for a storage battery, and configured to perform power conversion; and
a control part configured to control charging and discharging of the storage battery with the power conversion unit,
wherein the control part is configured to control the power conversion unit not to perform the charging and discharging of the storage battery when determining that conversion efficiency is low under a prescribed condition, the conversion efficiency denoting a ratio of output power to input power in the power conversion unit,
wherein the charging/discharging device further comprises:
an input measuring part configured to measure the input power that is input to the power conversion unit; and
an output measuring part configured to measure the output power that is output from the power conversion unit, and
wherein the control part is configured to obtain the conversion efficiency from the input power measured by the input measuring part and the output power measured by the output measuring part,
the control part being configured to determine that the conversion efficiency is low, when the conversion efficiency is equal to or less than a predetermined reference value, and then control the power conversion unit not to perform the charging and discharging of the storage battery.

**4.** (Amended) The charging/discharging device according to claim 3, further comprising:
an input measuring part configured to measure the input power that is input to the power conversion unit; and
a storage part configured to store a correspondence relation between the input power and the conversion efficiency,
wherein the control part is configured to read, from the storage part, the conversion efficiency that corresponds to the input power measured by the input measuring part, and then determine that the conversion efficiency is low, when the conversion efficiency is equal to or less than a predetermined reference value, and then control the power conversion unit not to perform the charging and discharging of the storage battery.

**5.** (Amended) The charging/discharging device according to claim 3 or 4,
wherein the control part is configured to control the power conversion unit to perform the charging and discharging of the storage battery regardless of the conversion efficiency, when no power is supplied from a commercial power grid.

**6.** (Amended) A charging/discharging system, comprising:
the charging/discharging device according to any one of claims 3 to 5; and
a power supply device where output power thereof is varied.

**7.** The charging/discharging system according to claim 6,
wherein in the charging/discharging device, the power conversion unit comprises a plurality of power conversion units, and
wherein the charging/discharging system further comprises:
a total-input-acquiring part configured to acquire total power obtained by summing input powers that are input to the plurality of power conversion units; and
a managing part configured to select at least one power conversion unit to be used for performing the power conversion, from the plurality of power conversion units, according to the total power acquired by the total-input-acquiring part, and instruct the control part not to allow the remaining power conversion units to perform the power conversion.

**8.** The charging/discharging system according to claim 6,
wherein the power conversion unit comprises:
a bidirectional DC/AC inverter configured to convert the input power from AC power to DC power for the charging of the storage battery,
the bidirectional DC/AC inverter being configured to convert power stored in the storage battery from DC power to AC power for the discharging of the storage battery to output the converted AC power as the output power; and
a plurality of bidirectional DC/DC converters provided between the storage battery and the bidirectional DC/AC inverter, each of which being configured to convert power to prescribed DC power, and
wherein the control part is configured to select at least one bidirectional DC/DC converter to be used for performing the power conversion, according to the input power, and control not to allow the remaining bidirectional DC/DC converters to perform the power conversion.

**9.** The charging/discharging system according to any one of claims 6 to 8,
wherein the power supply device is a solar power generation device configured to perform maximum power point tracking control to a solar cell,
wherein the solar power generation device comprises:
the solar cell;
a boosting part configured to boost DC power that is generated by the solar cell; and
a solar-cell-side power conversion unit configured to convert, to AC power, the DC power that is output from the boosting part, and
wherein the charging/discharging device is provided to be inserted between the storage battery, and a contact point between the boosting part and the solar-cell-side power conversion unit.
